# EUROPÄISCHE PATENTANMELDUNG

(11) **EP 2 055 661 A2**
(43) Veröffentlichungstag der Anmeldung: **06.05.2009**
(21) Anmeldenummer: 08016327.2
(22) Anmeldetag: 17.09.2008
(51) Int. Cl.: B65H 75/28, A01K 27/00

(54) **Befestigung für eine Leine an einer Rolle**

(30) Priorität: 02.11.2007 DE 202007015226 U
(71) Anmelder: Flexi-Bogdahn Technik GmbH & Co. KG., 22941 Bargteheide (DE)
(72) Erfinder: Bogdahn, Manfred, 22391 Hamburg (DE)
(74) Vertreter: Jaeschke, Rainer

(57) **Zusammenfassung**

Die Erfindung betrifft eine Befestigung für eine Leine (14) an einer Rolle (11), die in einem Gehäuse drehbar gelagert ist, dessen der Rolle zugewandte Wandung (13) in einem Abstand zur Umfangsfläche der Rolle angeordnet ist, und welche Leine durch eine Öffnung (15) in der Wandung aus dem Gehäuse verläuft und mit einer endständigen Schlaufe (16) an der Rolle befestigt ist, welche Schlaufe durch Umlegen des endständigen Leinenabschnitts und Befestigen des Leinenendes mit der Leine selbst gebildet ist. Gemäß der Erfindung wird vorgeschlagen, dass die Befestigung (19) des Leinenendes (18) mit der Leine (14) unter Bildung der Schlaufe (16) im voll abgerollten Zustand der Leine in Ausziehrichtung (20) in oder hinter der Öffnung (15) außerhalb des Gehäuses liegt.

## Beschreibung

Die Erfindung betrifft eine Befestigung für eine Leine an einer Rolle, die in einem Gehäuse drehbar gelagert ist, dessen der Rolle zugewandte Wandung in einem Abstand zur Umfangsfläche der Rolle angeordnet ist, und welche Leine durch eine Öffnung in der Wandung aus dem Gehäuse verläuft und mit einer endständigen Schlaufe an der Rolle befestigt ist, welche Schlaufe durch Umlegen des endständigen Leinenabschnitts und Befestigen des Leinenendes mit der Leine selbst gebildet ist. Die Erfindung betrifft insbesondere eine Hundeleine, bei welcher die Leine auf einer Rolle auf- und abrollbar ist. Es wird daher überwiegend von einer Hundeleine gesprochen, ohne dass damit eine Beschränkung verbunden sein soll.

Unter der Befestigung soll der Bereich verstanden werden, in dem das Leinenende mit der Leine verbunden ist. Es handelt sich dabei in der Regel um einen Leinenabschnitt mit einer Längenausdehnung von 0,5 cm bis 2 cm, über den das Leinenende mit der Leine verbunden ist. Es wird im Folgenden überwiegend lediglich von der Befestigung gesprochen.

Eine solche Befestigung einer Leine an einer Rolle findet beispielsweise bei mechanisch auf- und abrollbaren Leinen zum Führen von Tieren Anwendung, wie sie aus der EP 0 941 657 B1 bekannt ist. Das die Leine und die Rolle aufnehmende Gehäuse weist einen Handgriff auf, mit dem die Leineneinrichtung getragen werden kann. Es ist eine Bremseinrichtung vorhanden, um die Leine in gewünschter Länge anzuhalten. Die Bremseinrichtung ist zudem mit einer Verriegelungseinrichtung versehen, um die Bremseinrichtung im arretierenden Zustand zu halten. Die Leine verbleibt dann im ausgezogenen Zustand in der gewünschten Länge. Es ist natürlich auch möglich, dass die Leine vollständig abgerollt wird. Dann wird die Leine erst bei Erreichen der maximalen Ausziehlänge durch die Rolle selbst gehalten.

Es ist bei solchen Leinen unvermeidlich, dass die Leine an den Innenwandungen der Öffnung scheuert, wodurch sich ein Verschleiß der Leine einstellt. Zu diesem Verschleiß kommt die erhöhte Zugbelastung beim Anhalten der Leine. Es ist aus der DE 20 2006 002 147 U1 bekannt, die Öffnung relativ zum Gehäuse beweglich zu gestalten. Durch die Bewegung der Auslauföffnung in Zugrichtung werden die Kräfte, die auf die Leine wirken, reduziert. Allerdings ist die Leine relativ aufwendig zu montieren, da die Befestigung zur Bildung einer kleinen Schlaufe möglichst nah am Leinenende angeordnet ist. Die Montage erfordert somit einige Geschicklichkeit.

Der Erfindung liegt die Aufgabe zugrunde, eine Befestigung einer Leine an einer Rolle so auszubilden, dass unter anderem die Montage der Leine erleichtert wird.

Die Aufgabe wird gemäß der Erfindung dadurch gelöst, dass die Befestigung des Leinenendes mit der Leine unter Bildung der Schlaufe im voll abgerollten Zustand der Leine in Ausziehrichtung in oder hinter der Öffnung außerhalb des Gehäuses liegt. Dies hat den Vorteil, dass die Leine eine relativ große Schlaufe aufweist und somit gut montierbar ist.

Die Leine kann seilförmig oder als Gurt ausgebildet sein. Bei seilförmigen Leinen verteilt sich die Reibungskraft bei voll abgerollter Leine auf zwei Seilen, so dass hier die auf jedes einzelne Seil wirkende Reibungskraft bei voll ausgezogener Leine verringert wird.

Das Leinenende kann mit der Leine unter Bildung der Schlaufe vernäht sein. Diese Art der Befestigung ist haltbar und mit relativ einfachen Mitteln herstellbar. Es ist auch möglich, dass, insbesondere bei der Verwendung von Kunstfasern für die Leine, das Leinenende mit der Leine verklebt oder verschweißt ist. Auch kann das Leinenende mit der Leine sowohl verklebt oder verschweißt als auch vernäht sein.

Es kann vorgesehen werden, dass die Länge der Schlaufe so gewählt ist, dass im vollständig abgerollten Zustand die Befestigung in Ausziehrichtung teilweise innerhalb der Öffnung liegt. Zweckmäßig ist es aber, wenn die Länge der Schlaufe so gewählt ist, dass im vollständig abgerollten Zustand die Befestigung in Ausziehrichtung mit geringem Abstand und insbesondere 1 cm bis 10 cm hinter der Öffnung liegt. Dann liegt der Befestigungsbereich außerhalb der Öffnung und reibt nicht an der Innenwandung. Ein Lösen der Befestigung ist nicht zu befürchten.

Schließlich hat sich gezeigt, dass der Lauf der Leine durch die Öffnung aufgrund der doppellagigen Ausbildung nicht behindert wird. Es kann aber vorgesehen werden, das die Leine an der Stirnseite des Endes besonders fest vernäht oder abgeflacht ausgebildet ist derart, dass ein Durchrutschen der Leine erleichtert wird. Zusätzlich oder alternativ kann die Austrittsöffnung auf ihrer der Rolle zugekehrten Seite sich in Zugrichtung konisch verjüngend ausgebildet sein. Ein Durchführen des verdickten doppellagigen Abschnitts der Leine wird dadurch ebenfalls erleichtert.

Die Schlaufe kann in beliebiger Weise an der Rolle befestigt werden. Zweckmäßig ist es, wenn die Schlaufe an der Rolle mit einem exzentrisch zur Drehachse der Rolle verlaufenden Stift gehalten ist. Der Stift wird dabei in den seitlichen Flanschen gehalten, die die Rolle seitlich unter Bildung des Wickelraums für die Leine begrenzen. Diese Art der Befestigung hat sich bewährt und kann hohe Zugkräfte aufnehmen.

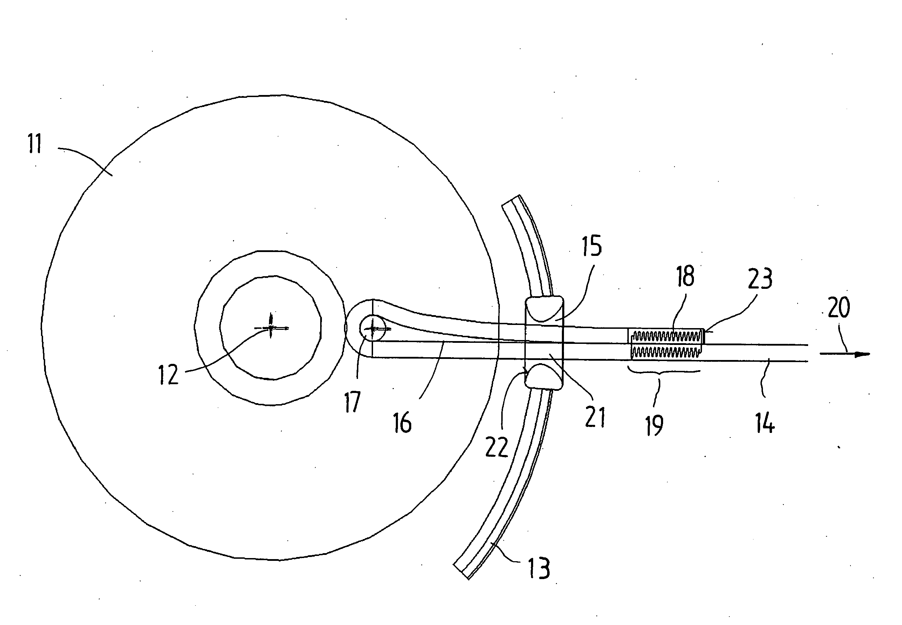

Die Erfindung wird im Folgenden anhand der schematischen Zeichnung näher erläutert. Die einzige Figur zeigt eine Leineneinrichtung mit einer Rolle und dem zugeordneten Gehäuseabschnitt mit der Austrittsöffnung für die Leine.

Die in der Zeichnung dargestellte Leineneinrichtung weist eine Rolle 11 auf, die um eine Achse 12 drehbar in einem nicht vollständig gezeigten Gehäuse 13 gelagert ist. Es kann eine Feder vorhanden sein, gegen deren Kraft die Leine 14 abrollbar ist und aufgrund deren Rückstellkraft die Leine wieder auf die Rolle aufrollbar ist. Es können zudem Bremseinrichtungen vorhanden sein, um die Leine in der gewünschten Länge anzuhalten. Das Gehäuse weist einen Handgriff auf, mit dem die Leineneinrichtung getragen werden kann. Weiterhin umfasst das Gehäuse eine Austrittsöffnung 15, durch welche die Leine aus dem Gehäuse geführt ist. Insoweit ist eine derartige Leine als auf- und abrollbare Hundeleine bekannt und bedarf keiner weiteren Erläuterung.

Die Zeichnung zeigt die Leine im vollständig abgerollten Zustand. Die Befestigung der Leine 14 erfolgt durch eine Schlaufe 16, die von einem zur Drehachse 12 exzentrischen Stift 17 an der Rolle 11 in deren innen liegenden mittleren Bereich gehalten wird. Durch Drehen der Rolle 11 in die eine oder andere Richtung wird die Leine aufbeziehungsweise abgerollt.

Die Schlaufe 16 wird durch Umlegen des Leinenendes 17 gebildet. Das endständige Leinenende 18 ist mit der Leine 14 in einem Befestigungsbereich 19 verbunden, beispielsweise vernäht.

Im Einzelnen ist die Anordnung so getroffen, dass die Länge der Schlaufe so gewählt ist, dass die Befestigung 19 im gezeigten vollständig abgerollten Zustand in Zugrichtung 20 hinter der Austrittsöffnung 15 und somit außerhalb des Gehäuses liegt. Dadurch wird erreicht, dass der Bereich 21, der im vollständig abgerollten Zustand an der Innenwandung der Austrittsöffnung 15 anliegt, doppellagig ausgebildet wird. Sofern die Leine als Seil mit einem im Wesentlichen runden Querschnitt ausgebildet ist, werden die beiden Seilabschnitte nebeneinander in der Öffnung liegen. Sofern die Leine als Gurt ausgebildet ist, liegen die Gurtabschnitte übereinander.

Die Öffnung 15 ist auf ihrer der Rolle 11 zugewandten Seite 22 in Zugrichtung 20 konisch verjüngend ausgebildet. Dadurch wird ein Hindurchführen des doppellagigen Schlaufenabschnitts und des hervorstehenden Stirnendes 23 durch die Öffnung erleichtert.

## Patentansprüche

1. Befestigung für eine Leine (14) an einer Rolle (11), die in einem Gehäuse drehbar gelagert ist, dessen der Rolle zugewandte Wandung (13) in einem Abstand zur Umfangsfläche der Rolle angeordnet ist, und welche Leine durch eine Öffnung (15) in der Wandung aus dem Gehäuse verläuft und mit einer endständigen Schlaufe (16) an der Rolle befestigt ist, welche Schlaufe durch Umlegen des endständigen Leinenabschnitts und Befestigen des Leinenendes mit der Leine selbst gebildet ist, **dadurch gekennzeichnet, dass** die Befestigung (19) des Leinenendes (18) mit der Leine (14) unter Bildung der Schlaufe im voll abgerollten Zustand der Leine in Ausziehrichtung (20) in oder hinter der Öffnung (15) außerhalb des Gehäuses liegt.

2. Befestigung nach Anspruch 1, **dadurch gekennzeichnet, dass** die Leine (14) seilförmig oder als Gurt ausgebildet ist.

3. Befestigung nach Anspruch 1 oder 2, **dadurch gekennzeichnet, dass** das Leinenende (18) mit der Leine unter Bildung der Schlaufe vernäht ist.

4. Befestigung nach einem der Ansprüche 1 bis 3, **dadurch gekennzeichnet, dass** das Leinenende mit der Leine verklebt oder verschweißt ist.

5. Befestigung nach einem der Ansprüche 1 bis 4, **dadurch gekennzeichnet, dass** die Länge der Schlaufe so gewählt ist, dass im vollständig abgerollten Zustand die Befestigung in Ausziehrichtung teilweise innerhalb der Öffnung liegt.

6. Befestigung nach einem der Ansprüche 1 bis 4, **dadurch gekennzeichnet, dass** die Länge der Schlaufe (16) so gewählt ist, dass im vollständig abgerollten Zustand die Befestigung (19) in Ausziehrichtung mit geringem Abstand und insbesondere 1 cm bis 10 cm hinter der Öffnung (15) liegt.

7. Befestigung nach einem der Ansprüche 1 bis 6, **dadurch gekennzeichnet, dass** die Austrittsöffnung (15) auf ihrer der Rolle (11) zugekehrten Seite (22) sich in Zugrichtung konisch verjüngend ausgebildet ist.

8. Befestigung nach einem der Ansprüche 1 bis 7, **dadurch gekennzeichnet, dass** die Schlaufe (16) an der Rolle mit einem exzentrisch zur Drehachse (12) der Rolle verlaufenden Stift (17) gehalten ist.
